# FASCICULE DE BREVET EUROPEEN

(11) **EP 1 134 661 B1**
(45) Date de publication et mention de la délivrance du brevet: **17.07.2002**
(21) Numéro de dépôt: 01400681.1
(22) Date de dépôt: 14.03.2001
(51) Int. Cl.: G06F 11/36

(54) **Procédé d'analyse d'un logiciel de test de composants électroniques**
Verfahren zur Analyse eines Programms zum Testen elektronischer Bauteile
Method for analysing a program for testing electronic components

(30) Priorité: 14.03.2000 FR 0003267
(43) Date de publication de la demande: 19.09.2001
(73) Titulaire: Bealach no bo Finne Teo/Ta Galaxy, South-Dublin 2 (IE)
(72) Inventeur: Lejeune, M. Philippe, 28630 Sours (FR)
(74) Mandataire: Schmit, Christian Norbert Marie

(56) Documents cités:
- WO-A-97/02528
- DE-A- 19 739 380
- US-A- 3 763 474
- US-A- 5 355 320
- US-A- 5 724 260

## Description

La présente invention a pour objet un procédé d'analyse d'un logiciel de tests. Elle trouve plus particulièrement son utilisation dans le domaine des logiciels de tests mis en oeuvre par des appareils de tests pour tester des composants électroniques, notamment pour évaluer les performances d'un logiciel utilisé comme outil de contrôle de la qualité de fabrication de composants électroniques, des fabrications de composants étant généralement en grandes séries. Dans l'état de la technique on ne connaît pas de procédés d'analyse de tels logiciels de tests. L'intérêt de l'invention est de proposer un procédé d'analyse permettant d'organiser une maintenance d'un appareil de tests, et d'exploiter des résultats fournis par ce procédé d'analyse, ainsi que ceux fournis par le logiciel de tests, à des fins d'optimisation du logiciel.

Dans l'état de la technique, on connaît un appareil de tests mettant en oeuvre un programme de test du logiciel de tests, tel que le programme de test comporte une succession d'instructions à effectuer, afin de tester un composant à tester. Cette succession d'instructions, ainsi que des critères d'acceptation vis à vis des résultats obtenus suite à la réalisation de ces instructions, sont stockés dans une mémoire de données de l'appareil de tests. Un appareil de tests comporte généralement un microprocesseur permettant d'échanger des informations avec la mémoire de données. D'autre part, le microprocesseur commande un multiplexeur de l'appareil de tests. Le multiplexeur permet d'associer à des broches de l'appareil de tests des potentiels à appliquer en des points particuliers du composant électronique à tester. D'autre part il permet également d'identifier des potentiels émis par le composant dans ces broches. Le microprocesseur enregistre les potentiels émis par chacune des broches, ce qui constitue des résultats du programme de test. Les résultats sont ensuite enregistrés dans une mémoire de mesures de l'appareil de tests.

Pour garantir une qualité des résultats fournis par un tel appareil de tests, il faut assurer le bon fonctionnement de chacun des composants électriques et électroniques qui constituent l'appareil de tests lui-même. Ainsi, dans l'état de la technique, on doit fréquemment réparer l'appareil de tests. Par exemple, si un nombre important de composants à tester sont rejetés de manière consécutive, et ce pour un même motif, alors il faul arrêter l'appareil de tests et entamer une recherche de panne au niveau des composants électroniques qui le constituent. De même, dans un autre cas de figure, si l'appareil de tests ne peut plus effectuer le programme de test en entier, alors il faut arrêter les tests effectués avec cet appareil, et entamer une recherche de panne. Or la recherche de panne est une opération fastidieuse dans l'état de la technique. En effet, on recherche des pannes sur l'appareil de tests selon un ordre logique qui est fonction d'une fréquence d'apparition des pannes pour chacun des composants constitutifs de l'appareil de tests. Cet ordre de recherche de panne est établi de manière empirique, en fonction d'observations faites par des utilisateurs de l'appareil de tests. Cette recherche de panne est réalisée indépendamment de la connaissance des instructions contenues dans le programme de test, et mettant en oeuvre les différents composants de l'appareil.

Dans l'état de la technique, on connait de l'enseignement du document US-A-5,355,320, un système pour contrôler un procédé de production de composants électroniques, ce système comportant un logiciel prévoyant une analyse du système.

Dans l'état de la technique, l'utilisation d'un appareil de tests mettant en oeuvre un programme de test pose des problèmes. En effet, un tel appareil de tests tombe fréquemment en panne, et ce de manière inopinée, ce qui peut être gênant lorsque la panne survient pendant une campagne de tests sur des lots de composants à tester. D'autre part, lorsque l'appareil de test est arrêté pour cause de panne, la réparation de cette panne peut parfois être longue, dans la mesure où aucune méthode ne permet de trouver rapidement la cause de la panne et des moyens de la résoudre. En effet, la démarche empirique utilisée ne permet pas d'optimiser la résolution de ce type de problème. Par ailleurs, dans l'état de la technique, il n'existe pas de moyen de maintenance préventive, permettant de minimiser la survenue de pannes. En effet, on doit faire face, seulement le moment venu, au problème. Il n'y a pas de moyens de les éviter.

L'invention a pour objet de remédier aux problèmes cités en proposant un procédé d'analyse d'un logiciel de tests, tel que le procédé d'analyse enregistre un nombre de réalisations d'une opération donnée d'un programme de test du logiciel. Un logiciel de tests peut comporter des programmes, tel que chaque programme est spécifique à un type de composant électronique donné. Un programme de test comporte des opérations, ou instructions, à exécuter par le biais de l'appareil de tests. On enregistre alors, pour chaque programme de test, le nombre de réalisations de chacune des opérations. En outre, le procédé d'analyse évalue également le nombre de fois où un composant électronique de l'appareil de tests est sollicité par l'un quelconque des programmes de test du logiciel de tests. Ainsi, on peut déduire un classement des composants électroniques de l'appareil de tests en fonction du nombre de fois où ils sont sollicités par le logiciel. Par ailleurs, on peut également connaître les opérations les plus fréquemment réalisées par chacun des programmes de test. Selon le procédé de l'invention, on peut évaluer un taux d'usure de chacun des composants de l'appareil de tests, et également prévoir l'évolution de ce taux d'usure pour chacun des composants lors d'un lancement d'une série de test sur une série de composants à tester. On peut ainsi prévoir un remplacement prématuré, voire une fréquence de remplacement de chacun de ces composants, de manière à éviter l'apparition de pannes.

De plus, à partir de ces informations fournies par le procédé d'analyse on peut également prévoir une optimisation d'un agencement des opérations contenues dans chacun des programmes de test. Cette optimisation vise à réduire le nombre de réalisation des opérations les plus fréquentes. D'autre part, dans la mesure où l'on peut connaître, par le procédé d'analyse, une durée de réalisation de chaque opération, on va préférentiellement chercher à diminuer le nombre de réalisation des opérations les plus longues. La solution apportée par l'invention permet de réaliser une maintenance préventive sur l'appareil de tests, et également d'optimiser le logiciel, voire les programmes de test mis en oeuvre par ce logiciel.

L'invention concerne donc un procédé d'analyse d'un logiciel de tests, le logiciel de tests étant mis en oeuvre par un appareil de tests pour tester des composants électroniques, le logiciel comportant plusieurs programmes de test, chaque programme comportant plusieurs instructions exécutables par l'appareil de test sur les composants électroniques, caractérisé en ce qu'il comporte les étapes suivantes :
- on teste des composants électroniques sur l'appareil de tests, au moyen de programmes dudit logiciel de tests,
- on enregistre des nombres d'occurrence de chacune des instructions au cours de réalisations sur un ou plusieurs composants électroniques d'un programme ou de l'ensemble de ces programmes.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1: un schéma d'un procédé d'analyse d'un logiciel selon l'invention ;
- Figure 2: un schéma d'analyse de données selon le procédé, d'analyse de l'invention.

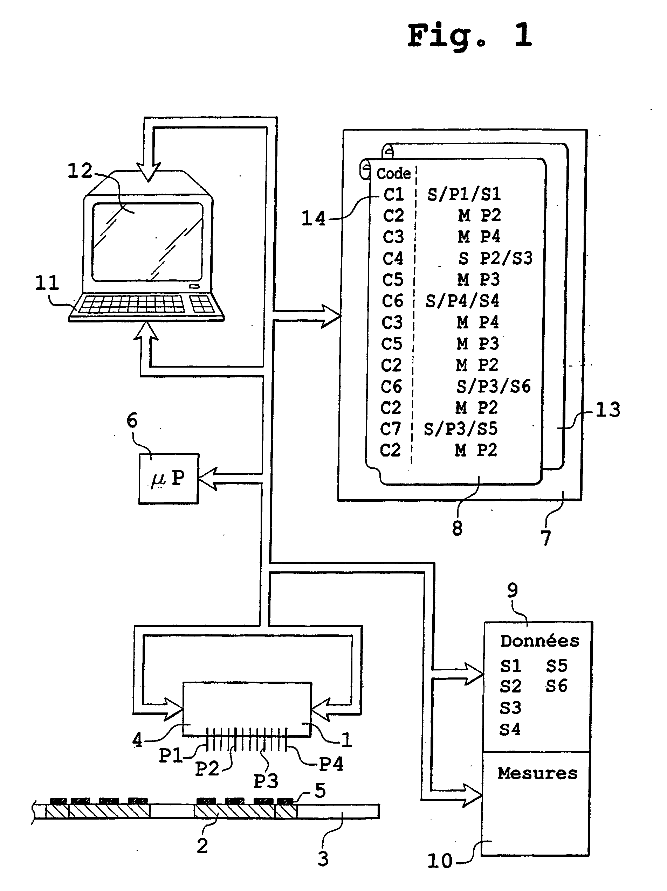

La figure 1 montre un appareil de tests 1 pour tester un composant électronique 2. Le composant électronique 2 est par exemple une carte munie d'un microcircuit électronique, comme une carte à puce ou un composant mémoire. Généralement ce composant électronique 2 est présenté sur une plaque 3 appelée "wafer", tel q'un wafer 3 comporte généralement plusieurs composants électroniques tel que 2 à tester. Les composants d'un tel wafer 3 peuvent être tous identiques les uns aux autres, ou éventuellement différents. Dans un exemple préféré, un wafer 3 comporte des circuits intégrés tous identiques les uns aux autres.

L'appareil de tests 1 comporte un module 4 comportant des broches par exemple P1, P2, P3 et P4, pour venir au contact de points particuliers 5 du composant- électronique 2 à tester. Le module 4 peut comporter une multitude de broches pour venir au contact d'une multitude de points particuliers du composant électronique 2. Les broches sont réparties selon une géométrie particulière qui permet de mettre en vis-à-vis, et de manière connue, chacune des broches avec chacune respectivement un point particulier du composant électronique 2 à tester.

L'appareil de tests 1 comporte également un microprocesseur 6 pour gérer des flux d'informations, tels que des bus de données, de commandes et d'adressages émis vers le module 4 et reçus de ce module 4. Le microprocesseur 6 appelle dans un logiciel 7 un programme de test 8. Le programme de test 8 appelé est fonction de la nature du composant à tester. Le logiciel 7 comporte plusieurs programmes de test tels que 8.

Dans un exemple préféré, un opérateur peut piloter le microprocesseur 6 par le biais d'un clavier 11, et peut recevoir des informations émises par le microprocesseur 6 par le biais d'un écran 12. Par exemple, un utilisateur peut, à l'aide du clavier 11 imposer au microprocesseur 6 l'utilisation du programme 8, ou d'un autre programme 13 stocké dans le logiciel 7. D'autre part, cet utilisateur peut éventuellement voir s'afficher sur l'écran 12 des résultats de mesures demandées dans le programme 8, ou des résultats du procédé d'analyse du programme 8, voire éventuellement des résultats du procédé d'analyse du logiciel 7.

Le programme 8 comporte plusieurs opérations, ou lignes d'instructions 14. Ces opérations 14 sont exécutées par l'intermédiaire du module 4. Les lignes d'instructions 14 sont repérées par des codes, par exemple C1, C2, C3, C4, C5, C6, C7. Une même ligne d'instruction, ou opération, 14 peut être répétée plusieurs fois au sein d'un même programme. Par exemple, comme il est présenté à la figure 1, la ligne d'instruction dont le code est C1 est répétée une fois dans le programme 8, alors que la ligne d'instruction C2 est répétée quatre fois dans ce même programme 8.

Dans un exemple, le programme 8 comporte essentiellement deux type d'instructions. D'une part des instructions de type "envois d'un potentiel", par exemple S/P1/S1 de code C1, qui ont pour but d'alimenter la broche P1 avec une valeur S1. D'autre part le programme 8 comporte des instructions de type "mesure", par exemple M P2, de code C2, qui a pour but de demander une mesure d'un potentiel de la broche P2. Le programme 8 est exécuté ligne après ligne par le microprocesseur 6. Dans le cas d'une ligne d'instruction du type S/P1/S1, le microprocesseur 6 appelle, dans la mémoire de données 9, la valeur S1. Dans le cas de la ligne d'instruction MP2, la mesure du potentiel de la broche P2 est stockée par le microprocesseur 6 dans la mémoire de mesures 10.

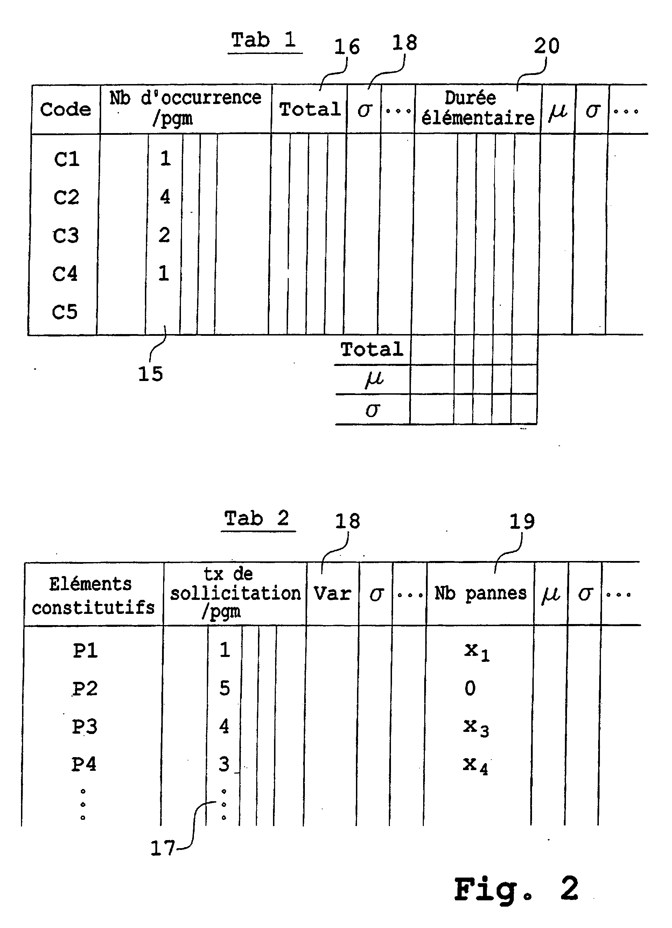

Figure 2 dans un tableau Tab 1, pour chaque ligne d'instruction 14 distincte, identifiée par son code, on note dans une colonne 15 de ce tableau, un nombre d'occurrence de cette instruction 14 lors de la réalisation d'un programme de test sur un composant électronique 2. Etant donné que le logiciel 7 est utilisé pour tester plusieurs composants électroniques tels que 2, le tableau Tab1 comporte alors plusieurs colonnes telles que 15. Chaque colonne telle que 15 comporte le nombre d'occurrence de chaque instruction pour toutes les instructions proposées par le logiciel 7, à chaque nouvelle réalisation d'un programme tel que 8 ou 13 du logiciel 7.

Dans un tel tableau, on peut également enregistrer dans une colonne 16 un nombre total d'occurrences pour chacune des instructions 14. Une colonne 16 peut correspondre à la somme des nombres d'occurrences, lors des réalisations d'un même programme tel que 8. On a ainsi plusieurs colonnes telles que 16 dans le tableau Tab1, une par programme tel que 8 ou 13 proposé par le logiciel 7. On peut de plus obtenir un total, dans une autre colonne telle que 16, correspondant à un total du nombre d'occurrence d'une instruction dues à l'ensemble des programmes du logiciel 7, c'est-à-dire un total du nombre d'occurrences dues à chaque programme du logiciel 7 mettant en oeuvre cette instruction. De plus, on peut enregistrer dans une colonne 18 des valeurs statistiques calculées à partir de ces données chiffrées. Par exemple, on peut calculer un écart-type et/ou une variance de ces données.

De la même manière que pour chaque instruction 14 dans le tableau Tab1, on peut réaliser un deuxième tableau Tab2 pour chacun des éléments constitutifs du module 4, notamment pour ceux mis en oeuvre par des programmes tels que 8 du logiciel 7. Le module 4 se décompose en éléments tels que les broches P1, P2, P3 et P4 et des microcircuits électroniques pour piloter chacune de ces broches. Le tableau Tab2 comporte donc une ligne pour chacune de ces éléments. Dans le tableau Tab2 on évalue un taux de sollicitation de chacun des éléments constitutifs du module 4. Ainsi selon l'exemple de la figure 1, on obtient que la broche P1 a été sollicitée une fois, alors que la broche P2 a été sollicitée cinq fois, lors de la réalisation du programme 8 pour tester un composant.

Les taux de sollicitations sont alors stockés dans une colonne 17. Pour chaque réalisation d'un programme tel que 8, on enregistre dans une colonne telle que 17 les taux de sollicitations de composants mis en oeuvre. Un tel tableau Tab2 peut comporter plusieurs colonnes telles que 17, autant qu'il y a de réalisations de programmes du logiciel 7. On peut enregistrer, dans une colonne 18 pour chaque élément constitutif, les taux de sollicitation total, ce total faisant la somme des sollicitations dues à l'ensemble des programmes mis en oeuvre pour tester des composants, ou mis en oeuvre pendant une période donnée. Ainsi, on peut aussi estimer un total du taux de sollicitations dues au logiciel 7 de chacun des éléments constitutifs. Des analyses statistiques peuvent être réalisées sur les valeurs, par exemple on peut, pour chaque élément constitutif, évaluer un écart-type et/ou une variance, et/ou une moyenne dans une colonne telle que 18.

On peut également évaluer dans le tableau tab 2, pour chaque composant, un taux de sollicitations subies depuis la mise en place dans l'appareil de tests. Etant donné que tous les composants constitutifs d'un appareil de tests ne sont pas renouvelés simultanément, on prévoit de remettre les compteurs à zéro de manière individuelle pour chacun des composants.

Dans chacun des deux tableaux décrits précédemment, on peut déduire de ces informations, un moyen de classer les opérations d'un programme, ou d'un logiciel, en fonction d'un nombre d'occurrence de réalisation. On peut par exemple classer ces instructions, ou opérations, entre elles, notamment ce classement peut être par ordre décroissant en fonction de leur nombre d'occurrence total de réalisation. Ainsi avec un tel classement, on peut mettre en avant les instructions les plus fréquemment mises en oeuvre par un programme de test, ou de manière plus générale les plus fréquemment mises en oeuvre par le logiciel de tests.

De même, à partir du taux de sollicitation de chacun des éléments constitutifs de l'appareil de tests, on peut déterminer un total du nombre de sollicitation de chacun de ces éléments. Le total pouvant être effectué soit pour un programme en particulier soit pour l'ensemble des programmes mis en oeuvre par le logiciel 7 de tests. Ainsi on peut savoir quels sont les éléments de l'appareil de tests qui sont les plus sollicités par les programmes de test. On peut donc effectuer un classement parmi ces éléments constitutifs selon un ordre décroissant par rapport au nombre total de sollicitation. Ainsi ce classement, notamment celui par ordre décroissant selon le nombre total de sollicitation depuis la mise en place, permet de déterminer un ordre préférentiel de recherche de pannes. En effet, les éléments d'un appareil de tests les plus sollicités sont les plus à risque en cas de panne, ils sont les plus fragilisés par l'ensemble des tests effectués, et donc ils sont en général les premiers à tomber en panne. La connaissance de cet ordre permet donc d'effectuer une recherche de panne simplifiée et plus rapide.

D'autre part, on peut enregistrer sur ce même tableau, un nombre de pannes observées et identifiées pour chacun des éléments constitutifs. On note par exemple dans une colonne 19 du tableau Tab2 des nombres x1, x3 et x4 pour respectivement les éléments constitutifs P1, P3 et P4. Cette connaissance est empirique et est renseignée par un utilisateur de l'appareil de tests. On connaît une durée de vie statistiques des composants.

Ainsi, on peut corréler pour un élément de l'appareil de tests, le nombre de pannes observées de manière empirique avec son taux de sollicitation depuis sa mise en place. En fonction d'une corrélation observée, en compilant des données obtenues sur plusieurs composants consécutifs, mis en place à un même endroit dans l'appareil de tests, entre le taux de sollicitation et le nombre de panne, on détermine une durée de vie théorique de cet élément dans l'appareil de tests. Par ailleurs, étant donné que l'on connaît le nombre de sollicitations de ce composant par programme et par logiciel, on peut prévoir au bout de combien de temps, c'est à dire la durée de vie théorique, il faut changer cet élément constitutif. Pour améliorer la maintenance d'un appareil de tests, préférentiellement, on détermine cette durée de vie théorique inférieure à la durée de vie statistique, de manière à ce que les pannes n'aient plus lieu. On réalise ainsi de la maintenance préventive. On peut prévoir dans un exemple de redéterminer la durée de vie théorique d'un composant à chaque fois que le nombre de pannes observées pour ce composant devient trop important.

De même étant donné que l'on connaît à l'avance le type de campagnes de tests qui vont être mises en oeuvre sur l'appareil de tests, on peut calculer le nombre prévisionnel de fois où chaque composant va être sollicité, c'est à dire que l'on peut calculer l'incrémentation du taux de sollicitation de chaque composant. On peut alors prévoir d'éventuellement changer un composant avant de lancer une campagne de tests sur un ensemble de composants à tester, pour éviter de. devoir arrêter les tests au milieu de cet ensemble.

D'autre part, pour chaque opération d'un programme de test, on peut également enregistrer dans une colonne 20 du tableau Tab1, la durée élémentaire observée à chaque fois que l'opération est mise en oeuvre. On a ainsi une colonne telle que 20 pour chaque réalisation de l'opération considérée. On peut ensuite effectuer des calculs statistiques, tels que des moyennes, des écarts-type, avec ces valeurs. Les durées sont spécifiques à chacune des opérations de test.

On peut de plus évaluer une durée totale de réalisation d'un programme de test. On peut effectuer le calcul pour chaque réalisation d'un programme de test sur un composant à tester. Ainsi on obtient autant de valeurs qu'il y a eu de composants testés. On peut calculer un total, une moyenne, un écart-type, ou d'autres valeurs statistiques à partir de ces durées totales de réalisation d'un test sur un composant à tester.

De manière moins formelle, on peut prévoir simplement d'enregistrer des durées de séquences de test. Une séquence comporte alors plusieurs opérations de test successives. Pour améliorer le logiciel, on peut optimiser chaque programme en diminuant sa durée de réalisation d'un test sur un composant. Pour cela, on peut mettre en place deux axes principaux de recherche de diminution de la durée élémentaire d'un programme. Le premier axe consiste à chercher à diminuer le nombre des opérations étant identifiées comme étant les plus longues, selon le tableau Tab1. Un deuxième axe de recherche de diminution peut être de chercher à diminuer les opérations les plus fréquemment mis en oeuvre, également selon les données de Tab1. En effet on peut penser qu'une opération souvent mise en oeuvre peut être utilisée pour différentes fonctions de tests, et alors n'être réalisée qu'une seule fois. Il faut alors pouvoir utiliser des résultats obtenus par cette opération pour plusieurs tests distincts.

## Revendications

1. Procédé d'analyse d'un logiciel de tests (7), le logiciel de tests étant mis en oeuvre par un appareil de tests (1) pour tester des composants électroniques (2), le logiciel comportant plusieurs programmes de test (8, 13), chaque programme comportant plusieurs instructions (14) exécutables par l'appareil de test sur les composants électroniques, **caractérisé en ce qu'**il comporte les étapes suivantes
- on teste des composants électroniques sur l'appareil de tests (1), au moyen de programmes (8, 13) dudit logiciel de tests (7),
- on enregistre des nombres (15, 16) d'occurrence de chacune des instructions (14) au cours de réalisations sur un ou plusieurs composants électroniques d'un programme ou de l'ensemble de ces programmes.

2. Procédé selon la revendication 1 **caractérisé en ce que**
- on classe les instructions de test en fonction d'un nombre d'occurrence statistique de réalisations.

3. Procédé selon l'une des revendications 1 à 2 **caractérisé en ce que**
- on déduit ou on enregistre un taux de sollicitations (17) des éléments constitutifs de l'appareil de tests.

4. Procédé selon la revendication 3 **caractérisé en ce que**
- on classe les éléments constitutifs en fonction d'un taux statistique de sollicitations.

5. Procédé selon l'une des revendications 3 à 4 **caractérisé en ce que**
- on détermine un classement des éléments constitutifs de l'appareil de tests en fonction de leur taux de sollicitation, pour déterminer un ordre de recherche optimisé à mettre en oeuvre en cas d'une panne de cet appareil.

6. Procédé selon l'une des revendications 3 à 5 **caractérisée en ce que**
- on enregistre un nombre (19) d'occurrence de panne pour chacun des éléments constitutifs de l'appareil de tests,
- on détermine une durée de vie statistique de ces éléments constitutifs, en corrélant pour chacun des éléments le taux de sollicitations et le nombre d'occurrence de pannes.

7. Procédé selon la revendication 6 **caractérisé en ce que**
- on change de manière préventive les éléments constitutifs de l'appareil de tests à une fréquence inférieure à leur durée de vie statistique.

8. Procédé selon l'une des revendications 1 à 7 **caractérisé en ce que**
- on enregistre des durées de réalisation de séquences du programme de test,
- on optimise le logiciel en diminuant une durée de réalisation d'un programme de test sur un composant électronique, une diminution de cette durée étant obtenue en diminuant le nombre de réalisation des instructions les plus longues, et en diminuant le nombre d'occurrence de réalisations des instructions les plus fréquentes.

## Patentansprüche

1. Verfahren zum Analysieren einer Test-Software (7),
wobei die Test-Software mit einem Testgerät (1) zum Testen von elektronischen Komponenten (2) durchgeführt wird,
die Software mehrere Testprogramme (8, 13) aufweist,
jedes Programm mehrere Befehle (14) enthält, die durch das Testgerät in Bezug auf die elektronischen Komponenten ausgeführt werden können,
**gekennzeichnet durch** die folgenden Schritte:
Testen von elektronischen Komponenten mit dem Testgerät (1) mittels Programmen (8, 13) der Test-Software (7),
Aufzeichnen der Anzahl (15, 16) jedes der Befehle (14) während der Durchführung mit einer oder mehreren elektronischen Komponenten bei einem oder dem Verbund von Programmen.

2. Verfahren nach Anspruch 1,
**gekennzeichnet durch**
Klassifizieren der Testbefehle in Abhängigkeit von einer statistischen Durchführungsanzahl.

3. Verfahren nach Anspruch 1 oder 2,
**gekennzeichnet durch**
Ableiten oder Aufzeichnen eines Belastungsgrades (17) von Bestandteilen des Testgerätes.

4. Verfahren nach Anspruch 3,
**gekennzeichnet durch**
Klassifizieren von Bestandteilen in Abhängigkeit von einem statistischen Belastungsgrad.

5. Verfahren nach Anspruch 3 oder 4,
**gekennzeichnet durch**
Bestimmen einer Klassifizierung von Bestandteilen des Testgerätes in Abhängigkeit von ihrem Belastungsgrad, um eine optimierte Suchreihenfolge festzulegen, die bei Ausfall des Gerätes durchzuführen ist.

6. Verfahren nach einem der Ansprüche 3 bis 5,
**gekennzeichnet durch**
Aufzeichnen der Anzahl (19) von Ausfällen von jedem der Bestandteile des Testgerätes,
Bestimmen einer statistischen Lebensdauer dieser Bestandteile, indem bei jedem Element der Belastungsgrad und die Anzahl der Ausfälle korreliert wird.

7. Verfahren nach Anspruch 6,
**gekennzeichnet durch**
präventives Auswechseln der Bestandteile des Testgerätes mit einer Rate, die kleiner als deren statistische Lebensdauer ist.

8. Verfahren nach einem der Ansprüche 1 bis 7,
**gekennzeichnet durch**
Aufzeichnen der Durchführungsdauer der Testprogrammsequenzen,
Optimieren der Software **durch** Verringern einer Dauer der Durchführung eines Testprogramms für elektronische Komponenten, wobei eine Verringerung dieser Dauer erreicht wird, indem die Anzahl der Durchführungen der längsten Befehle verringert wird und die Anzahl der Durchführungen der häufigsten Befehle verringert wird.

## Claims

1. Method of analysis of test software (7), the test software being implemented by a test apparatus (1) to test electronic components (2), the software comprising a plurality of test programmes (8, 13), each programme comprising a plurality of instructions (14) which can be executed by the test apparatus on the electronic components, **characterised in that** it comprises the following steps:
- electronic components are tested on the test apparatus (1) by means of programmes (8, 13) of said test software (7) ;
- numbers (15, 16) of occurrences of each of the instructions (14) in the course of executions of a programme or of the entirety of these programmes on one or more electronic components are recorded.

2. Method according to claim 1, **characterised in that**
- the test instructions are graded as a function of a statistical number of occurrences of executions.

3. Method according to one of claims 1 to 2, **characterised in that**
- a rate of implementations (17) of the constituent elements of the test apparatus is deduced or recorded.

4. Method according to claim 3, **characterised in that**
- the constituent elements are graded as a function of a statistical rate of implementations.

5. Method according to one of claims 3 to 4, **characterised in that**
- a grading is determined for the constituent elements of the test apparatus as a function of their rate of implementation in order to determine an optimised search order to be implemented in the event of a malfunction of this apparatus.

6. Method according to one of claims 3 to 5, **characterised in that**
- a number (19) of occurrences of malfunctions is recorded for each of the constituent elements of the test apparatus;
- a statistical life is determined for these constituent elements by correlating the rate of implementations and the number of occurrences of malfunctions for each of the elements.

7. Method according to claim 6, **characterised in that**
- the constituent elements of the test apparatus are changed preventatively at a frequency which is less than their statistical life.

8. Method according to one of claims 1 to 7, **characterised in that**
- periods of execution of sequences of the test programme are recorded;
- the software is optimised by reducing a period of execution of a test programme on an electronic component, a reduction of this period being obtained by reducing the number of executions of the longest instructions, and by reducing the number of occurrences of executions of the most frequent instructions.
